# EUROPEAN PATENT SPECIFICATION

(11) **EP 3 882 523 B1**
(45) Date of publication and mention of the grant of the patent: **06.03.2024**
(21) Application number: 20472003.1
(22) Date of filing: 20.03.2020
(51) Int. Cl.: F24D 3/10, F24H 9/00, F24H 9/13, F28D 20/00

(54) **INLET NOZZLE FOR WATER HEATER**
EINLASSDÜSE FÜR WASSERERHITZER
BUSE D'ENTRÉE POUR CHAUFFE-EAU

(43) Date of publication of application: 22.09.2021
(73) Proprietor: Tesy Ood, 9701 Shumen (BG)
(72) Inventor: Kyurkchiev, Zhechko Angelov, 1166 Sofia (BG)
(74) Representative: Benatov, Samuil Gabriel

(56) References cited:
- EP-A1- 2 679 928
- EP-A1- 3 228 949
- WO-A1-2005/093337
- FR-A- 1 416 182
- GB-A- 479 609

## Description

### Technical field of the invention

The inlet nozzle for water heater is applicable to water heaters with bottom water supply, in particular in the process of heating liquids, mainly for industrial and domestic water. The inlet nozzle can be used for either horizontal type water heaters or vertical type water heaters, floor mounted or wall mounted water heaters.

### Prior art

A water inlet nozzle in an electric water heater is known, disclosed in patent application BG 112675. It consists of a bell-shaped outer housing, with connecting neck, fixed to its upper part and centered with respect to the housing, which is connected to an inner tube to which a nozzle with fixing neck at its lower part is attached. In the connection area of the nozzle and inner tube, outlets are formed for the passage of cold water to the water tank of the water heater. The fixing neck of the nozzle plays the role of a spacer on the inner wall of the water tank when mounting the inlet nozzle near the bottom of the water tank. The mounting itself is done through an opening in the upper part of the water tank. By means of this device, cold water is supplied to the water tank of the water heater, which spreads through the outlet openings inside the outer housing of the nozzle, where through an opening at the bottom of the outer housing it passes to the volume of the water tank. This inlet nozzle is not suitable for mounting on a water heater with bottom water supply.

EP2679928A1 discloses an inlet nozzle for water heater, which consists of an outer pipe in which there is a sealing through pipe. The sealing through pipe is supported from below by a fixed through cap by means of a retainer. There is a water reflector at the upper part of the sealing through pipe that has a support with a foot with an opening in it. There is a sealing on the upper face of the outer pipe and the foot is located over it, which is locked by a locking means to the sealing through pipe. The water reflector can be of different shapes, each of which acts as a shallow "hat" located centrally above the inlet and through pipes. This inlet nozzle is mounted through an opening at the bottom of the water tank and distributes water through the through pipe, which is subsequently dispersed sideways to the volume of the water tank by the water reflector of the nozzle. This prevents the flow of incoming cold water from not being directed straight up.

There are layers with different temperature in the water volume of the electric water heater, which are created by the sprayed cold water through the openings of the nozzle.

Document FR1416182 discloses a water heater with an inlet nozzle for water heater with bottom or upper water supply with a deflector and a nozzle. The deflector is a hollow body with an opening at one end, a closed dome located opposite to the opening, and at a side wall in the cavity of which the nozzle is arranged. Said nozzle consists of a nozzle tube fixed to the deflector side wall and connected with its lower end to a fitting. The tube has an end cap serving for a closure of the tube. The nozzle tube is displaced from the geometric center of the deflector opening to the side wall of the deflector. The nozzle tube is open on one side facing the side wall of the deflector.

A disadvantage of the known inlet nozzles is that they lead to throttling and/or acceleration of the flow of cold water, which reduces the drainage efficiency of the heated water volume.

Another disadvantage is that directing of the flow of cold water is not effective enough, and when the nozzle is close to the vertical wall of the water tank, jets of water hit it, resulting in an uneven mixing of cold and hot water in the water tank.

Another disadvantage of this nozzle is that it has limited ability to reduce the turbulence of the flow of cold water exiting the openings, which also results in uneven mixing of cold and hot water in the water tank.

### Summary of the invention

An object of the invention is to provide an inlet nozzle for water heater that effectively controls the mixing process of hot and cold water during the usage of the water heater while maintaining the laminarity of the incoming, to the water tank of the water heater, flow.

This object is achieved by creating an inlet nozzle for water heater with bottom water supply according to claim 1. The inlet nozzle comprises a deflector, a fitting and a nozzle.

The deflector is a hollow body with an opening at lower end, a closed dome located opposite to the opening, and at least one side wall, in the cavity of which the nozzle is arranged, which consists of a nozzle tube fastened to the deflector side wall and connected with its lower end to said fitting to its end, located adjacent to the deflector opening. According to the invention, the nozzle tube is displaced from the geometric center of the deflector opening to its side wall. The upper end of the nozzle tube is open toward the closed dome of the deflector. The fitting has a fixing element at its lower end.

In a preferred embodiment, the deflector is bell-shaped, the closed dome being shaped as a hemisphere or part of a hemisphere. The middle part of the deflector is shaped as a cylinder or expanding truncated cone with straight or concave walls, and the portion adjacent to the opening is an expanding sideways rotary body with a continuous conoidal circumferential surface, obtained on the basis of a curvilinear concave formative.

Preferably, the diameter of the nozzle tube V2 is larger than the diameter of the fitting V1.

Preferably, the longest distance V3 between the nozzle tube and the side wall of the deflector that is opposite to the side wall toward which the nozzle tube is displaced is larger than the diameter V2 of the nozzle tube.

Preferably, the distance H1 between the outlet of the nozzle tube and the dome of the deflector is larger than the diameter V2 of the nozzle tube.

In one embodiment, the nozzle tube is made integral with the fitting, and the fixing element is connected to the fitting by means of a detachable connection adapted to fix the fixing element to the fitting. Alternatively, the fitting may be detachably connected to the nozzle tube.

In one embodiment, the nozzle tube touches and is fastened to the side wall of the deflector. Alternatively, the nozzle tube may be made integral with the side wall of the deflector.

Preferably, the deflector is made of a material that is heat resistant to a temperature of at least 130°C, and the nozzle is made of a material that is heat resistant to a temperature of at least 80°C. In a preferred embodiment, the deflector is made of glass-filled plastic and the nozzle is made of plastic without fillers which increase its temperature resistance and strength.

Preferably the deflector height is at least 25 mm, preferably from 84 mm to 120 mm, more preferably 120 mm.

In one embodiment the outer wall of the closed side of the deflector has a mounting means to be manually hold by a user, which facilitates mounting of the inlet nozzle in the water heater.

The inlet nozzle according to the invention is used in a water heater with bottom water supply wherein the inlet nozzle is mounted inside the water heater to the cold water inlet tube with deflector opening facing downwards.

In one embodiment, the water heater is provided with a vertical water tank and the inlet nozzle is positioned so that the side of the deflector, adjacent to which the nozzle is located is facing the side wall of the water heater and the opposite side of the deflector is facing the central vertical axis of the water tank, wherein the lower edge of the deflector is located at a distance between 5 mm and 20 mm, preferably at a distance of 9 mm, from the bottom of the water tank.

In another embodiment, the water heater has a horizontal water tank and the inlet nozzle is positioned so that the side of the deflector, adjacent to which the nozzle is located is facing the side wall of the water heater and the opposite side of the deflector is facing the central cross-section of the body of the water tank, wherein the lower edge of the deflector is located at a distance between 10 mm and 30 mm, preferably at a distance of 21 mm, from the bottom of the water tank.

The inlet nozzle according to the invention significantly limits the mixing of the incoming cold water with the already heated water and achieves a high utilization rate of the useful volume of the water heater.

### Brief description of the drawings

Hereinafter, the inlet nozzle for water heater, subject of the invention, is presented in more detail with the help of the accompanying drawings, where:
Figure 1 is a detailed longitudinal sectional view of mounted in a horizontal water heater inlet nozzle, with shown diameters of inlet nozzle elements according to a preferred embodiment of the invention.
Figure 2 is a longitudinal sectional view of a vertical water heater with mounted inlet nozzle according to a preferred embodiment of the invention.

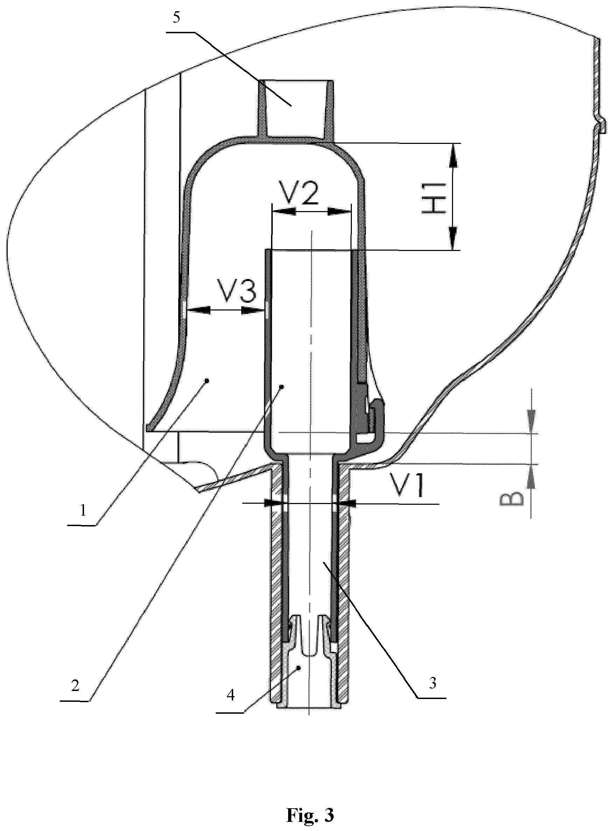

Figure 3 is a detailed longitudinal sectional view of mounted in a vertical water heater inlet nozzle according to a preferred embodiment of the invention.

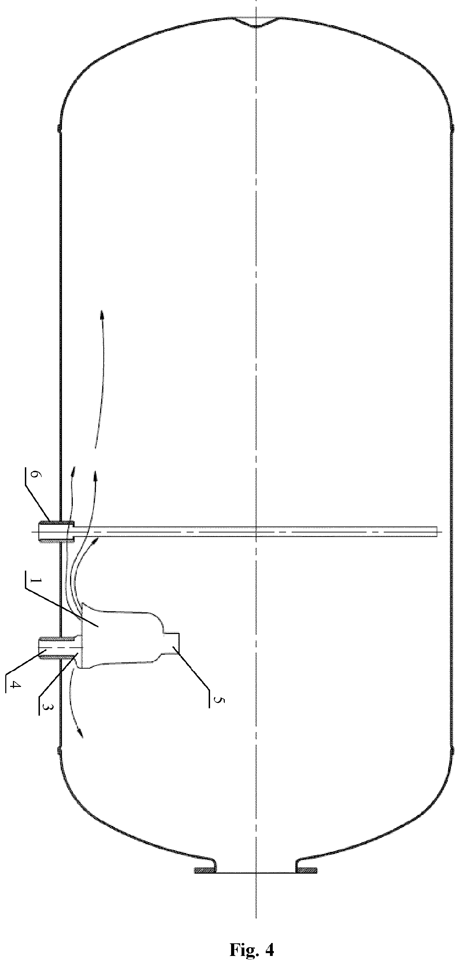

Figure 4 is a longitudinal sectional view of a horizontal water heater with mounted inlet nozzle, showing the distribution of the flow of liquid supplied by the inlet nozzle according to a preferred embodiment of the invention.
Figure 5 is a cross-sectional view of a vertical water heater with mounted inlet nozzle, showing the distribution of the flow of liquid supplied by the inlet nozzle according to a preferred embodiment of the invention.
Figure 6 is a detailed vertical sectional view of alternative embodiments of the inlet nozzle according to the invention and thumbnail plan views of each of the alternative embodiments.

### Exemplary embodiment and application of the invention

The terms "lower", "upper", "below", "above" used in this application refer to the normal working position of the device when used.

The inlet nozzle according to the invention consists of a deflector 1 and a nozzle, the deflector 1 being generally a hollow cup-shaped body, its opening facing downwards, and the nozzle is located in the cavity of the deflector and consists of a nozzle tube 2 fastened to the deflector side wall 1, and a fitting 3 with fixing element 4.

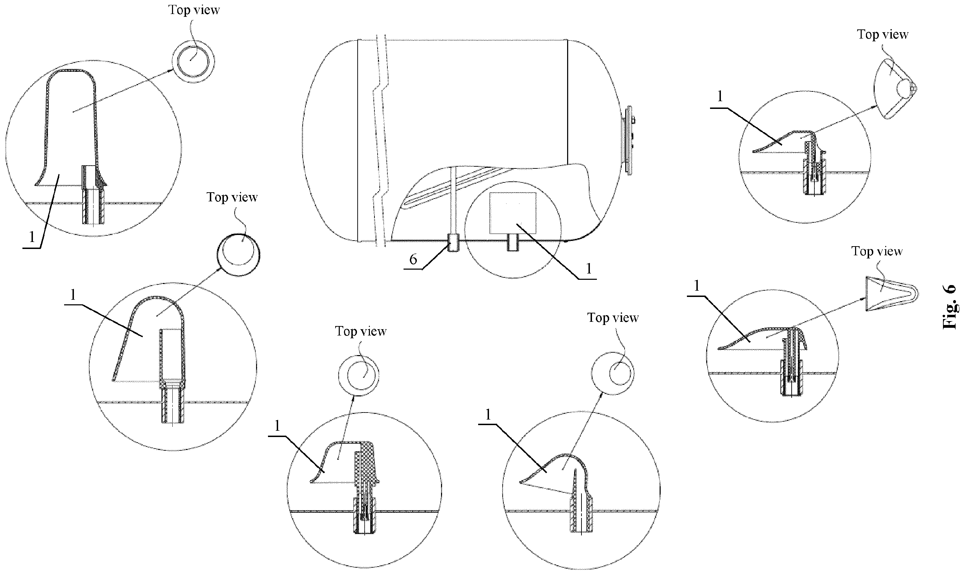

The deflector 1 is a hollow body with an opening at its lower end, a closed dome located opposite to the opening and at least one side wall in which cavity the nozzle is located. Preferably, the closed dome is formed as a hemisphere or part of a hemisphere. The middle part of the deflector 1 is formed as a cylinder with straight walls, or alternatively as an expanding truncated cone with straight or concave walls. The portion adjacent to the opening is an expanding sideways rotary body with a continuous conoidal circumferential surface, obtained on the basis of a curvilinear concave formative. The deflector 1 can be of rotationally symmetrical form or bilaterally symmetrical form. Preferably, the deflector 1 is bell-shaped. Alternatively, the deflector 1 may be helmet-shaped. Other alternatives to the shape of the deflector 1, in which its shape expands from the dome to its lower periphery, are shown in Figure 6.

The height of the deflector 1 according to the invention must be more than 25 mm. In a preferred embodiment, the height of the deflector 1 is from 84 mm to 120 mm. A higher deflector 1 guarantees a more efficient distribution of the jet of the liquid, which leads to more hot water provided by the operation of the water heater. Accordingly, the optimum value is 120 mm. Any value greater than 120 mm also requires a respective change in the size of the deflector 1 to ensure its operation according to the present invention. A larger deflector 1 also requires a larger nozzle. However, a height greater than 120 mm does not lead to greater efficiency because the hot water obtained at a larger than 120 mm size of the deflector 1 is similar to that of a size 120 mm. Accordingly, a larger deflector size 1 means excess material consumption. In one embodiment, the height of the deflector 1 may be 84 mm. This option is preferred for water heaters with a smaller volume capacity. Accordingly, depending on the size of the water tank of the water heater, a deflector 1 of different heights may be used so as to simultaneously provide an effective amount of hot water and to allow, and preferably in an easy way, mounting of the inlet nozzle in the water heater.

Preferably, on the outer wall of the closed side of the deflector 1, there is a mounting means for manual hold 5 by a user, which facilitates mounting of the inlet nozzle in the water heater, which typically occurs through the opening of the water tank in which a heater is placed. In the embodiment shown in the figures, the mounting means 5 is a cylindrical bushing, cast together with the deflector 1 from the same material.

The nozzle is located in the cavity of the deflector 1, and is composed of a nozzle 2 tube fastened to the wall of the deflector 1. According to the invention, the nozzle 2 tube is displaced from the geometric center of the opening of the deflector 1 towards its side wall. In a preferred embodiment, the nozzle 2 tube touches and is fastened to the wall of the deflector 1. The options for fastening are by clamp, rails, corresponding by form projections and grooves in the nozzle 2 tube and the deflector 1 and other known in the art means of detachable coupling. Said ways of fastening can be accomplished by fastening to the inner side of the side wall of the deflector 1, to the outer side of the side wall of the deflector 1, or simultaneously to the outer and inner sides of the deflector 1 wall. When fastening to the outer side of the side wall of the deflector 1, the nozzle 2 tube fasteners are more spaced than when fastening to the inner side of the side wall of the deflector 1. This is accomplished by extension arm extending from the periphery of the nozzle 2 tube beyond the periphery of the deflector 1, where, respectively, the clamp, rail, groove or projection of the nozzle 2 tube is located, towards the dome of the deflector 1, so that when the nozzle 2 tube is inserted in the deflector 1, it may engage with the corresponding clamp, rail, groove or projection of the deflector 1. Alternatively, the nozzle 2 tube may be made integral with the side wall of the deflector 1.

One end of the nozzle 2 tube is connected to a fitting 3, which is a tubular body. The fitting 3 is connected to a fixing element 4 at its free end with the possibility of fastening the fixing element 4 to the fitting 3. In a preferred embodiment, the nozzle 2 tube is made integral with the fitting 3, and the fitting 3 is connected to the fixing element 4 by detachable connection. The fixing element 4 is a monolithic circular through body with a circumferential periphery at one end, which extends sideways from the body and serves as a limiter, and with two or more hinged projections at the other end of the fixing element 4 which enter the fitting 3. The projections are made closer to the central axis of the body of the fixing element 4 compared to where the rounded body is located relative to that axis, thus forming a stepped edge. Each of the projections has an outwardly projecting tooth for engaging in a corresponding groove made inside the fitting 3, wherein all the teeth lie in one horizontal plane. To prevent wrong mounting of the fixing element 4, the distance between the stepped edge of at least one projection and the outwardly projecting tooth thereof is less than the distance between the stepped edge of the other projections and their outwardly projecting teeth. Alternatively, the nozzle 2 tube is connected by a detachable connection to the fitting 3, and the fitting 3 is made integral with the fixing element 4. In a third embodiment, the nozzle 2 tube, the fitting 3 and the fixing element 4 are connected by detachable connection. All nozzle elements that are detachably connected to one another can be connected directly to one another or have additional sealing details, such as O-rings.

Depending on the construction of the inlet tube of the water heater and in particular its length, the fitting 3 may be of different lengths and diameters. In the case of horizontally positioned water heaters with bottom water supply, the inlet tube is most often shorter than that of the vertical water heaters, and, accordingly, the fitting in horizontal water heaters is shorter than the fitting in vertical water heaters.

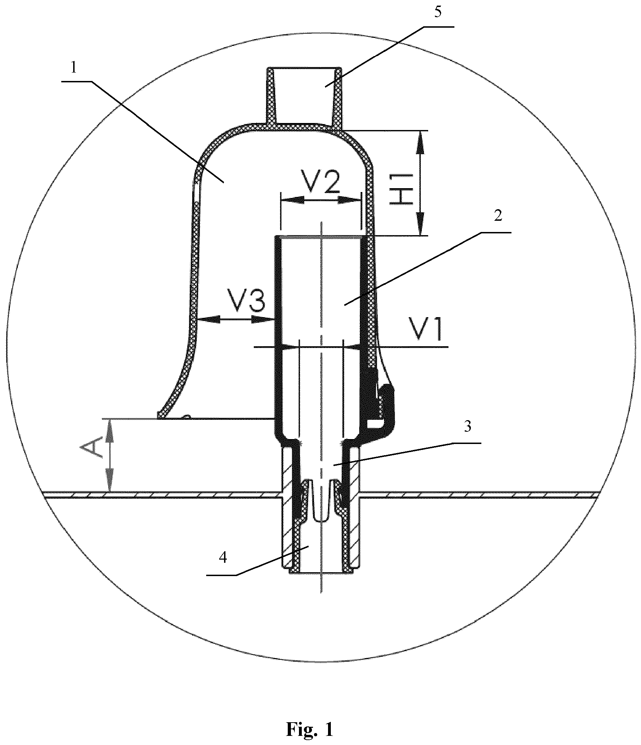

As shown in Figure 1, the inlet nozzle is characterized by parameters V1, V2, V3 and H1. Once it is supplied, the water passes through the fitting 3, which has a diameter V1. From there, the water flows to the nozzle 2 tube which has a diameter V2, then to the interior of the deflector 1, passing the distance H1 between the outlet of the nozzle 2 tube and the dome of the deflector 1, and continues through the space between the nozzle 2 tube and the side wall of the deflector 1 that is opposite to the side wall toward which the nozzle tube 2 is displaced, characterized by the longest distance V3. The upper end of the nozzle tube 2 is open toward the closed dome of the deflector 1. In order to prevent the swirl of the water outflow from the inlet nozzle, its velocity must be with a decreasing rate. This is achieved by increasing in succession the diameters and/or sections through which the water passes or by distancing the barriers it encounters. In particular, in one embodiment, the inlet nozzle has a nozzle tube diameter V2 that is larger than the fitting diameter V1. In another embodiment, the inlet nozzle has a longest distance V3 between the nozzle tube and the side wall of the deflector that is opposite to the side wall toward which the nozzle tube is displaced, which is larger than the diameter and respectively the diameter of the nozzle tube V2. In a third embodiment, the inlet nozzle has a distance H1 between the outlet of the nozzle tube and the dome of the deflector, which is greater than the diameter of the nozzle tube V2. In a preferred embodiment, the inlet nozzle is constructed with the following ratios:
- the diameter of the nozzle tube V2 is larger than the diameter of the fitting V1;
- the longest distance V3 between the nozzle tube and the side wall of the deflector that is opposite to the side wall toward which the nozzle tube is displaced is larger than the diameter and respectively the diameter of the nozzle tube V2;
- the distance H1 between the outlet of the nozzle tube and the dome of the deflector is larger than the diameter of the nozzle tube V2.

The deflector 1 must be made of a material that is heat resistant to a temperature of at least 130°C and the nozzle must be made of a material that is heat resistant to a temperature of at least 80°C, since the normal operating temperature in the water heater is 75°C. In this way, the inlet nozzle will withstand the working conditions in the water medium of the water heater and will not change its shape due to the working pressure in the device and the normal operating temperature in the device. Contamination of the water in the water heater caused by possible destruction of the inlet nozzle due to inappropriate fabrication material is also avoided. All materials must be suitable for contact with drinking water. Preferred materials are glass-filled plastic for fabrication of the deflector, and plastic without fillers enhancing its temperature resistance and strength for fabrication of the nozzle. Both pieces may be made of the same material, for example, glass-filled plastic or plastic without fillers, which increase its temperature resistance. Examples of glass-filled plastic are glass-filled polyamide or polypropylene. Alternative options for fabrication of the pieces of the inlet nozzle are metal material, which is preferably resistant to corrosion, glass, or ABS.

The inlet nozzle according to the invention is suitable for water heaters with bottom water supply. In these, both the cold water inlet tube and the hot water outlet tube 6 are mounted at the bottom of the water heater. These water heaters can be mounted both on the wall and on the floor. The water heaters may have horizontal or vertical water tanks.

Mounting of the inlet nozzle according to a preferred embodiment of the invention is accomplished by the following steps:
- holding by a user of the mounting means for holding 5 of the inlet nozzle;
- inserting the nozzle without the fixing element 4 into the water tank through the opening of the water tank through which a heater is inserted;
- inserting the nozzle with the deflector 1 opening facing downwards into an opening pre-made for it in the wall of the water tank;
- mounting the fitting 3 of the nozzle to the cold water inlet tube of the water heater;
- fixing the nozzle to the water tank by mounting the fixing element 4 to the cold water inlet tube of the water heater and securing the fixing element 4 to the nozzle.

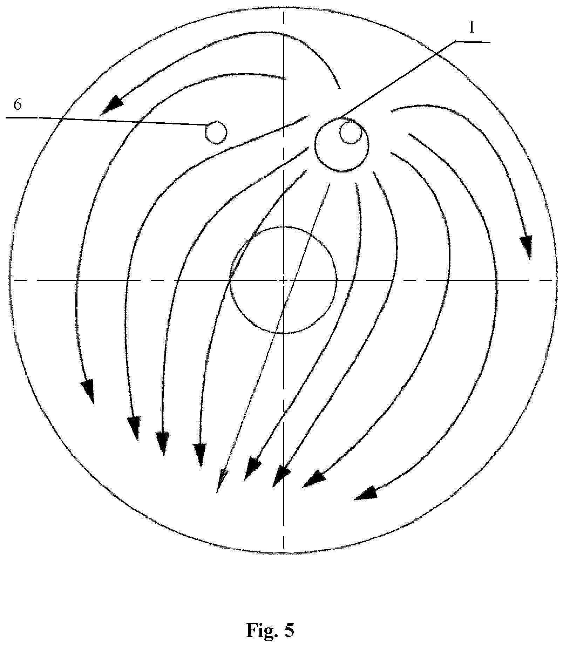

In the case of a water heater with vertical water tank, the inlet nozzle is arranged so that the side of the deflector 1, adjacent to which the nozzle is located, is facing the side wall of the water heater and the opposite side of the deflector 1 is facing the central vertical axis of the water tank, so that the water flow is favourably directed to the central axis of the water tank, as shown in Figure 5. The lower edge of the deflector 1 is positioned at a distance between 5 mm and 20 mm from the bottom of the water tank. The choice of this distance for each individual design solution depends on:
- overall deflector 1 height;
- deflector 1 diameters;
- the design and diameters of the nozzle.

The aim is that the water exiting the deflector 1 does not swirl after leaving the volume of the deflector 1, i.e. the combination of the above parameters and the distance described may cause the water velocity to be decreased or increased so as to avoid its swirling due to the velocity and/or contact with the bottom of the water tank. In a preferred embodiment, the distance is 9 mm from the bottom of the water tank.

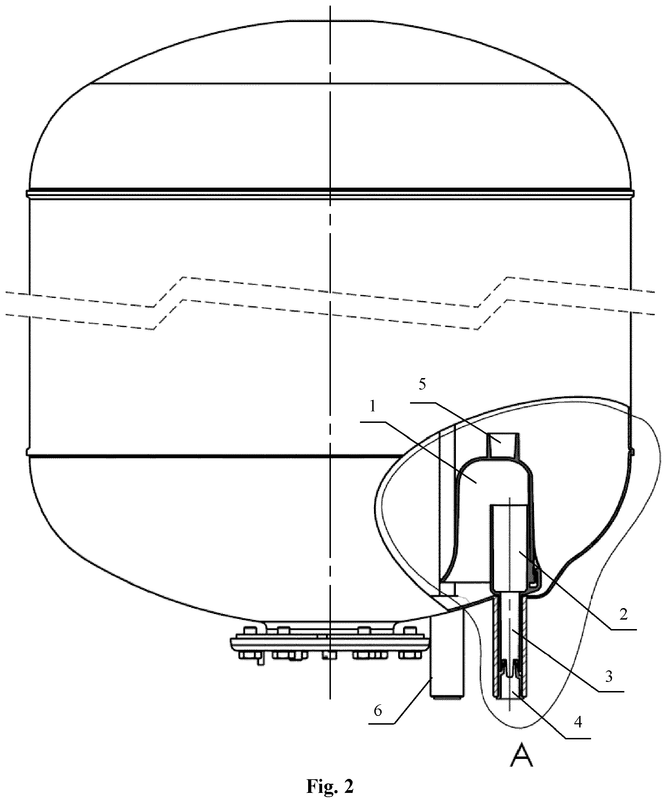

In one embodiment of a water heater with vertical water tank with inlet nozzle shown in Figure 2, the part of the bottom of the water tank located below and near the nozzle is made flat in order to facilitate welding the tubes of the water heater. Alternatively, it is possible that the water tank may not have such flat part.

In the case of a water heater with horizontal water tank, the inlet nozzle is arranged so that the side of the deflector 1, adjacent to which the nozzle is located, is facing the side wall of the water heater and the opposite side of the deflector 1 is facing the central cross section of the body of the water tank. The lower edge of the deflector 1 is located at a distance between 10 mm and 30 mm from the bottom of the water tank. In water heaters with horizontal water tank, as in water heaters with vertical water tank, the choice of this distance is made in order to avoid swirling of water after leaving the deflector 1, and accordingly each individual design solution depends on:
- overall deflector 1 height;
- deflector 1 diameters;
- the design and diameters of the nozzle.

In a preferred embodiment, the distance is 21 mm from the bottom of the water tank.

In normal operation of a water heater according to the invention, thanks to the nozzle, the direction and velocity of the cold water in the water tank are regulated, ensuring its calm and even distribution and creating a stable stratification. The stable stratification is expressed in weak convective motions and mixing due to turbulent nodes of water, and formation of well-defined stratification layers with lower and higher temperature. Because the lower part of the nozzle extends beyond the periphery of the deflector 1, an optimal distance A is provided between the deflector 1 and the bottom of the water tank, as shown in Figure 1, so as to ensure a stable stratification and correspondingly high utilization rate of the useful volume of the water heater. Fixing the nozzle to the water tank does not allow the flow of supplied water to push the inlet nozzle inside the water tank, nor does it allow the inlet nozzle to move freely, which can lead to a deterioration in the utilization rate of the useful volume of the water heater.

Various modifications of the inlet nozzle for water heater that also remain within the field and scope of the present invention defined in appended claims will be apparent to those skilled in the art.

The reference numbers of the technical features are given in the claims only for the purpose to increase the understanding of the claims and therefore these reference numbers have no limiting effect in terms of the interpretation of the elements, marked with these reference numbers.

## Claims

1. Inlet nozzle for a water heater with bottom water supply, the inlet nozzle comprising a deflector (1), a fitting and a nozzle, wherein the deflector (1) is a hollow body with an opening at lower end, a closed dome located opposite to the opening, and at least one side wall in the cavity of which the nozzle is arranged, said nozzle consists of a nozzle tube (2) fastened to the deflector (1) side wall and connected with its lower end to said fitting (3), which fitting (3) has a fixing element (4) at its lower end, wherein the nozzle tube (2) is displaced from the geometric center of the deflector opening to the side wall of the deflector (1), **characterized in that** the upper end of the nozzle tube (2) is open toward the closed dome of the deflector (1).

2. Inlet nozzle for a water heater according to claim 1, **characterized in that** the deflector (1) is bell-shaped, wherein the closed dome being shaped as a hemisphere or part of a hemisphere, the middle part of the deflector (1) is shaped as a cylinder or expanding truncated cone with straight or concave walls, and the portion adjacent to the opening is an expanding sideways rotary body with a continuous conoidal circumferential surface, obtained on the basis of a curvilinear concave formative.

3. Inlet nozzle for a water heater according to any one of the preceding claims, **characterized in that** the diameter V2 of the nozzle tube (2) is larger than the diameter V1 of the fitting (3).

4. Inlet nozzle for a water heater according to any one of the preceding claims, **characterized in that** the closed dome of the deflector (1) is formed as a hemisphere or part of a hemisphere and the middle part of the deflector (1) is formed as a cylinder with straight walls or as an expanding truncated cone with straight or concave walls, wherein the longest distance V3 between the nozzle tube (2) and the side wall of the deflector (1) that is opposite to the side wall toward which the nozzle tube (2) is displaced is larger than the diameter V2 of the nozzle tube (2).

5. Inlet nozzle for a water heater according to any one of the preceding claims, **characterized in that** the distance H1 between the outlet of the nozzle tube (2) and the dome of the deflector (1) is larger than the diameter V2 of the nozzle tube (2).

6. Inlet nozzle for a water heater according to any one of the preceding claims, **characterized in that** the nozzle tube (2) is made integral with the fitting (3), and the fixing element (4) is connected to the fitting (3) by means of a detachable connection adapted to fix the fixing element (4) to the fitting (3).

7. Inlet nozzle for a water heater according to any one of the preceding claims, **characterized in that** the nozzle tube (2) touches and is fastened to the side wall of the deflector (1).

8. Inlet nozzle for a water heater according to claims 1 to 6, **characterized in that** the nozzle tube (2) is made integral with the side wall of the deflector (1).

9. Inlet nozzle for a water heater according to any one of the preceding claims, **characterized in that** the deflector (1) is made of a material that is heat resistant to a temperature of at least 130°C and the nozzle is made of a material that is heat resistant to a temperature of at least 80°C.

10. Inlet nozzle for a water heater according to claim 9, **characterized in that** the deflector (1) is made of glass-filled plastic and the nozzle is made of plastic without fillers which increase its temperature resistance.

11. Inlet nozzle for a water heater according to any one of the preceding claims, **characterized in that** the height of the deflector (1) is at least 25 mm, preferably from 84 mm to 120 mm, more preferably 120 mm.

12. Inlet nozzle for a water heater according to any one of the preceding claims, **characterized in that** the outer wall of the closed side of the deflector (1) has a mounting means for manual hold (5) by a user, which facilitates mounting of the inlet nozzle in the water heater.

13. Water heater with bottom water supply **characterized in that** it comprises an inlet nozzle according to any one of claims 1-12, mounted inside the water heater to the cold-water inlet tube with deflector opening facing downwards.

14. Water heater according to claim 13, **characterized in that** the water heater has a vertical water tank and the inlet nozzle is positioned so that the side of the deflector (1), adjacent to which the nozzle is located is facing the side wall of the water heater and the opposite side of the deflector (1) is facing the central vertical axis of the water tank, wherein the lower edge of the deflector (1) is located at a distance between 5 mm and 20 mm, preferably at a distance of 9 mm, from the bottom of the water tank.

15. Water heater according to claim 13, **characterized in that** the water heater has a horizontal water tank and the inlet nozzle is positioned so that the side of the deflector (1), adjacent to which the nozzle is located is facing the side wall of the water heater and the opposite side of the deflector (1) is facing the central cross-section of the body of the water tank, wherein the lower edge of the deflector (1) is located at a distance between 10 mm and 30 mm, preferably at a distance of 21 mm, from the bottom of the water tank.

## Patentansprüche

1. Einlaufdüse für einen Wassererhitzer mit Wasserzufuhr von unten, wobei die Einlaufdüse einen Deflektor (1), ein Anschlussstück und eine Düse umfasst, wobei der Deflektor (1) ein Hohlkörper mit einer Öffnung am unteren Ende, einer geschlossenen Kuppel ist, die der Öffnung gegenüberliegt, und mindestens mit einer Seitenwand ist, in deren Hohlraum die Düse angeordnet ist, die besagte Düse aus einem Düsenrohr (2) besteht, das an der Seitenwand des Deflektors (1) befestigt und mit seinem unteren Ende mit dem Anschlussstück (3) verbunden ist, wobei das Anschlussstück (3) an seinem unteren Ende ein Befestigungselement (4) aufweist, wobei das Düsenrohr (2) von der geometrischen Mitte der Deflektoröffnung zur Seitenwand des Deflektors (1) hin versetzt ist, **dadurch gekennzeichnet, dass** das obere Ende des Düsenrohrs (2) in Richtung der geschlossenen Kuppel des Deflektors (1) offen ist.

2. Einlaufdüse für einen Wassererhitzer gemäß Anspruch 1, **dadurch gekennzeichnet, dass** der Deflektor (1) glockenförmig ist, wobei die geschlossene Kuppel als Halbkugel oder Teil einer Halbkugel geformt ist, der mittlere Teil des Deflektors (1) als Zylinder oder expandierender Kegelstumpf mit geraden oder konkaven Wänden geformt ist und der an die Öffnung angrenzende Abschnitt ein sich seitlich ausdehnender rotierender Körper mit einer kontinuierlichen konusförmigen Umfangsfläche ist, die auf der Grundlage einer gekrümmten konkaven Formgebung erhalten wird.

3. Einlaufdüse für einen Wassererhitzer gemäß einem der vorhergehenden Ansprüche, **dadurch gekennzeichnet, dass** der Durchmesser V2 des Düsenrohres (2) größer als der Durchmesser V1 des Anschlussstücks (3) ist.

4. Einlaufdüse für einen Wassererhitzer gemäß einem der vorhergehenden Ansprüche, **dadurch gekennzeichnet, dass** die geschlossene Kuppel des Deflektors (1) als Halbkugel oder Teil einer Halbkugel und der mittlere Teil des Deflektors (1) als Zylinder mit geraden Wänden oder als sich erweiternder Kegelstumpf mit geraden oder konkaven Wänden ausgebildet ist, wobei der längste Abstand V3 zwischen dem Düsenrohr (2) und der Seitenwand des Deflektors (1), die der Seitenwand gegenüberliegt, zu der das Düsenrohr (2) verschoben wird, größer als der Durchmesser V2 des Düsenrohrs (2) ist.

5. Einlaufdüse für einen Wassererhitzer gemäß einem der vorhergehenden Ansprüche, **dadurch gekennzeichnet, dass** der Abstand H1 zwischen dem Auslass des Düsenrohrs (2) und der Kuppel des Deflektors (1) größer als der Durchmesser V2 des Düsenrohrs (2) ist.

6. Einlaufdüse für einen Wassererhitzer gemäß einem der vorhergehenden Ansprüche, **dadurch gekennzeichnet, dass** das Düsenrohr (2) mit dem Anschlussstück (3) einstückig ausgebildet ist und das Befestigungselement (4) mit dem Anschlussstück (3) mittels einer lösbaren Verbindung verbunden ist, die geeignet ist, das Befestigungselement (4) an dem Anschlussstück (3) zu befestigen.

7. Einlaufdüse für einen Wassererhitzer gemäß einem der vorhergehenden Ansprüche, **dadurch gekennzeichnet, dass** das Düsenrohr (2) die Seitenwand des Deflektors (1) berührt und daran befestigt ist.

8. Einlaufdüse für einen Wassererhitzer gemäß einem der Ansprüche 1 bis 6, **dadurch gekennzeichnet, dass** das Düsenrohr (2) mit der Seitenwand des Deflektors (1) einstückig ausgebildet ist.

9. Einlaufdüse für einen Wassererhitzer gemäß einem der vorhergehenden Ansprüche, **dadurch gekennzeichnet, dass** der Deflektor (1) aus einem Material besteht, das bis zu einer Temperatur von mindestens 130°C hitzebeständig ist, und die Düse aus einem Material besteht, das bis zu einer Temperatur von mindestens 80°C hitzebeständig ist.

10. Einlaufdüse für einen Wassererhitzer gemäß Anspruch 9, **dadurch gekennzeichnet, dass** der Deflektor (1) aus glasgefülltem Kunststoff und die Düse aus Kunststoff ohne Füllstoffe, die ihre Temperaturbeständigkeit erhöhen, besteht.

11. Einlaufdüse für einen Wassererhitzer gemäß einem der vorhergehenden Ansprüche, **dadurch gekennzeichnet, dass** die Höhe des Deflektors (1) mindestens 25 mm, vorzugsweise 84 mm bis 120 mm, besonders bevorzugt 120 mm, beträgt.

12. Einlaufdüse für einen Wassererhitzer gemäß einem der vorhergehenden Ansprüche, **dadurch gekennzeichnet, dass** die Außenwand der geschlossenen Seite des Deflektors (1) ein Befestigungsmittel zum manuellen Halten (5) durch einen Benutzer aufweist, was die Montage der Einlaufdüse im Wassererhitzer erleichtert.

13. Wassererhitzer mit Wasserzufuhr von unten, **dadurch gekennzeichnet, dass** er eine Einlaufdüse gemäß einem der Ansprüche 1 bis 12 umfasst, die im Inneren des Wassererhitzers am Kaltwassereinlassrohr mit nach unten gerichteter Deflektoröffnung angebracht ist.

14. Wassererhitzer gemäß Anspruch 13, **dadurch gekennzeichnet, dass** der Wassererhitzer einen vertikalen Wassertank aufweist und die Einlaufdüse so positioniert ist, dass die Seite des Deflektors (1), neben der die Düse angeordnet ist, der Seitenwand des Wassererhitzers zugewandt ist und die gegenüberliegende Seite des Deflektors (1) der vertikalen Mittelachse des Wassertanks zugewandt ist, wobei die Unterkante des Deflektors (1) in einem Abstand zwischen 5 mm und 20 mm, vorzugsweise in einem Abstand von 9 mm, vom Boden des Wassertanks angeordnet ist.

15. Wassererhitzer gemäß Anspruch 13, **dadurch gekennzeichnet, dass** der Wassererhitzer einen horizontalen Wassertank aufweist und die Einlaufdüse so positioniert ist, dass die Seite des Deflektors (1), neben der die Düse angeordnet ist, der Seitenwand des Wassererhitzers zugewandt ist und die gegenüberliegende Seite des Deflektors (1) dem zentralen Querschnitt des Körpers des Wassertanks zugewandt ist, wobei die Unterkante des Deflektors (1) in einem Abstand zwischen 10 mm und 30 mm, vorzugsweise in einem Abstand von 21 mm, vom Boden des Wassertanks angeordnet ist.

## Revendications

1. Buse d'admission pour un chauffe-eau avec une alimentation en eau par le bas, la buse d'admission comprenant un déflecteur (1), un raccord (3) et une buse, selon lequel le déflecteur(1) est un corps creux avec une ouverture à son extrémité inférieure, un dôme fermé situé à l'opposé de l'ouverture, et au moins une paroi latérale dans la cavité dans laquelle la buse est placée, ladite buse comportant un tube de buse (2) fixé à la paroi latérale du déflecteur (1) et raccordé à son extrémité inférieure au dit raccord (3), lequel raccord (3) comporte un élément de fixation (4) à son extrémité inférieure, selon lequel le tube de buse (2) est déplacé depuis le centre géométrique de l'ouverture du déflecteur vers la paroi latérale du déflecteur (1), **caractérisée en ce que** l'extrémité supérieure du tube de buse (2) est ouverte en direction du dôme fermé du déflecteur (1).

2. Buse d'admission pour un chauffe-eau selon la revendication 1, **caractérisée en ce que** le déflecteur (1) est conformé en cloche, selon lequel le dôme fermé est conformé en hémisphère ou en une partie d'hémisphère, la partie médiane du déflecteur (1) est conformée en cylindre ou en cône tronqué qui s'étend avec des parois droites ou concaves, et la partie adjacente à l'ouverture est un corps rotatif s'étendant latéralement avec une surface circonférentielle conique continue obtenue sur la base d'une forme concave curviligne.

3. Buse d'admission pour un chauffe-eau selon l'une quelconque des revendications précédentes, **caractérisée en ce que** le diamètre(V2) du tube de buse (2) est supérieur au diamètre (V1) du raccord (3).

4. Buse d'admission pour un chauffe-eau selon l'une quelconque des revendications précédentes, **caractérisé en ce que** le dôme fermé du déflecteur (1) est conformé en hémisphère ou en une partie d'hémisphère et la partie médiane du déflecteur (1) est conformée en cylindre qui s'étend avec des parois droites ou qui s'étend en un cône tronqué avec des parois droites ou concaves, dans lequel la distance (V3) la plus longue entre le tube de buse (2) et la paroi latérale du déflecteur (1) qui est opposée à la paroi latérale vers laquelle le tube de buse (2) déplacé est plus large que le diamètre (V2)du tube de buse (2).

5. Buse d'admission pour un chauffe-eau selon l'une quelconque des revendications précédentes, **caractérisé en ce que** la distance (H1)entre la sortie du tube de buse (2) et le dôme du déflecteur (1) est plus grande que le diamètre (V2)du tube de buse (2).

6. Buse d'admission pour un chauffe-eau selon l'une quelconque des revendications précédentes, **caractérisé en ce que** le tube de buse (2) est intégré au raccord (3), et l'élément de fixation (4) est raccordé au raccord (3) par un moyen de raccordement détachable adapté à la fixation de l'élément de fixation (4) au raccord (3).

7. Buse d'admission pour un chauffe-eau selon l'une quelconque des revendications précédentes, **caractérisé en ce que** le tube de buse (2) est en contact et est fixé à la paroi latérale du déflecteur (1).

8. Buse d'admission pour un chauffe-eau selon les revendications 1 à 6 **caractérisé en ce que** le tube de buse (2) est intégré avec la paroi latérale du déflecteur (1).

9. Buse d'admission pour un chauffe-eau selon l'une quelconque des revendications précédentes, **caractérisé en ce que** le déflecteur (1) est issu d'un matériau qui est résistant à la chaleur à une température d'au moins 130°C, et la buse est issue d'un matériau qui est résistant à la chaleur à une température d'au moins 80°C.

10. Buse d'admission pour un chauffe-eau selon la revendication 9, **caractérisé en ce que** le déflecteur (1) est issu d'un matériau plastique chargé de verre et la buse est issue d'un plastique exempt de charge qui augmente sa résistance à la température.

11. Buse d'admission pour un chauffe-eau selon l'une quelconque des revendications précédentes, **caractérisé en ce que** la hauteur du déflecteur (1) est d'au moins 25 mm, de préférence entre 84 mm et 120 mm, plus spécifiquement préférentiellement de 120 mm.

12. Buse d'admission pour un chauffe-eau selon l'une quelconque des revendications précédentes, **caractérisé en ce que** la paroi extérieure du côté fermé du déflecteur (1) comporte un moyen de montage (5) pour une saisie manuelle par un utilisateur , qui facilite le montage de la buse d'admission sur le chauffe-eau.

13. Chauffe-eau avec une alimentation d'eau par le bas, **caractérisé en ce qu'**il comporte une buse d'admission selon l'une quelconque des revendications 1 à 12, qui est montée à l'intérieur du chauffe-eau au tube d'admission d'eau froide avec une ouverture du déflecteur (1) orientée vers le bas.

14. Chauffe-eau selon la revendication 13, **caractérisé en ce que** le chauffe-eau a un réservoir d'eau vertical et la buse d'admission est positionnée de sorte que le côté du déflecteur (1), adjacent à l'emplacement de la buse est orientée vers la paroi latérale du chauffe-eau et que le côté opposé du déflecteur (1) est orienté vers l'axe central du réservoir d'eau, dans lequel le bord inférieur du déflecteur (1) est situé à une distance entre 5 mm and 20 mm, de préférence à une distance de 9 mm, depuis le fond du réservoir d'eau.

15. Chauffe-eau selon la revendication 13, **caractérisé en ce que** le chauffe-eau comporte un réservoir d'eau horizontal et la buse d'admission est positionnée de sorte que le côté du déflecteur (1), adjacent à la position de la buse, est orienté vers la paroi latérale du chauffe-eau et que le côté opposé du déflecteur (1) est orienté vers la section centrale du corps du réservoir d'eau, dans lequel le bord inférieur du déflecteur (1) est placé à une distance entre 10 mm and 30 mm, de préférence à une distance de 21 mm, depuis le fond du réservoir d'eau.
